# EUROPÄISCHE PATENTSCHRIFT

(11) **EP 3 048 299 B1**
(45) Veröffentlichungstag und Bekanntmachung des Hinweises auf die Patenterteilung: **04.03.2020**
(21) Anmeldenummer: 16150531.8
(22) Anmeldetag: 08.01.2016
(51) Int. Cl.: F03D 13/10, F16F 7/10, F03D 80/00, F03D 13/20, B66C 1/10, F03D 13/40

(54) **LASTAUFNAHMEMITTEL FÜR EINEN TURM ODER EINE TURMSEKTION EINER WINDENERGIEANLAGE UND VERFAHREN ZUM ERRICHTEN EINER WINDENERGIEANLAGE**
LOAD BEARING DEVICE FOR A TOWER OR A SECTION OF A TOWER OF A WIND POWER PLANT AND METHOD FOR ERECTING A WIND POWER PLANT
MOYEN DE SUSPENSION DE CHARGE POUR UNE TOUR OU UNE SECTION DE TOUR D'UNE EOLIENNE ET PROCEDE DE MONTAGE D'UNE EOLIENNE

(30) Priorität: 26.01.2015 DE 102015000787
(43) Veröffentlichungstag der Anmeldung: 27.07.2016
(73) Patentinhaber: Senvion GmbH, 22297 Hamburg (DE)
(72) Erfinder: SEIDEL, Marc, 49082 Osnabrück (DE)
(74) Vertreter: Wallinger Ricker Schlotter Tostmann

(56) Entgegenhaltungen:
- EP-A1- 2 551 519
- EP-A2- 1 065 374
- CN-Y- 201 306 251
- JP-A- H0 781 874
- KR-B1- 101 287 140
- US-A1- 2012 063 915
- US-A1- 2012 131 876

## Beschreibung

Die Erfindung betrifft ein Lastaufnahmemittel für einen Turm oder eine Turmsektion einer Windenergieanlage, das Turmbefestigungsmittel zur Befestigung an einem oberen Ende oder im Bereich eines oberen Endes eines Turms oder einer Turmsektion einer Windenergieanlage und Befestigungspunkte zur Befestigung wenigstens eines Anschlagmittels eines Hebezeugs aufweist. Die Erfindung betrifft weiter ein Verfahren zum Errichten einer Windenergieanlage, insbesondere einer Offshore-Windenergieanlage.

Moderne Windenergieanlagen umfassen einen hohen Turm mit einer vertikalen Längsachse, häufig bestehend aus mehreren Turmsektionen, an dessen Spitze ein Maschinenhaus bzw. eine Gondel mit einem Rotor mit mehreren Rotorblättern und einer horizontalen Rotorachse um die Turmachse drehbar gelagert ist.

Türme von Onshore-Windenergieanlagen werden üblicherweise sektionsweise aus mehreren Sektion und direkt vor Ort an der Baustelle auf einem Fundament errichtet. Turmsektionen für solche Windenergieanlagen werden meist liegend zum Errichtungsort transportiert. Bei der Errichtung eines Turms einer Windenergieanlage werden die in der Regel mehreren einzelnen Turmsektionen nacheinander mit Hilfe eines Hebezeugs aus ihrer liegenden Position in eine aufgerichtete Position gebracht und auf einem Fundament, einem Hilfsfundament bzw. einer Einspannstelle und/oder einer zuletzt errichteten Turmsektion aufgesetzt und mit diesem oder dieser verbunden. Die Turmlängsachse wird dabei aus einer horizontalen in eine vertikale Orientierung gebracht.

Türme für Offshore-Windenergieanlagen hingegen werden vorzugsweise sektionsweise am Hafen der Verschiffung auf Hilfsfundamenten errichtet. Anschließend werden die zum Transport fertig errichteten Türme bzw. vertikal aufgerichteten Turmsektionen im Hafen auf ein Errichterschiff verladen und dort auf trägerrostartigen Hilfsfundamenten für den Transport, sog. "Grillages", befestigt. Aus Platzgründungen werden Offshore-Türme bevorzugt aufrecht stehend transportiert. Erst im Anschluss an die vollständige Turmerrichtung wird das Maschinenhaus, die sogenannte Gondel, auf dem Turm befestigt.

Bei Windenergieanlagentürmen handelt es sich um stark schwingungsanfällige Bauteile. Ein freistehender Turm ohne Gondel weist hierbei allerdings eine deutlich andere Eigenfrequenz auf als ein Turm mit einem an der Spitze angeordneten Maschinenhaus und Rotor.

Während der Errichtung einer Windenergieanlage bedeutet dies, dass ein freistehender und gondelloser Turm bzw. Turmrohbau, der an seiner Spitze noch nicht mit dem Gewicht des Maschinenhauses belastet ist, mit einer höheren Frequenz schwingt als nach dem Aufsetzen des Maschinenhauses.

Jede Struktur, so auch eine Windenergieanlage oder ein Windenergieanlagenturm, reagiert auf äußere Anregung, bspw. durch Wind oder Wellen, in einer bestimmten Frequenz mit eigenen Schwingungen, abhängig von der Frequenz der Anregung. Zudem hat jede Struktur sogenannte Eigenfrequenzen. Dies sind die Frequenzen, in denen das System schwingt, wenn es ausgelenkt und dann sich selbst überlassen wird. Für Windenergieanlagen relevant ist insbesondere die erste Eigenfrequenz, deren zugehörige erste Eigenform im Wesentlichen aus einer Biegeverformung des Turmes besteht. Sie wird daher auch "erste Biegeeigenfrequenz" genannt. Die zugehörige Eigenform ist die "erste Biegeeigenform". Diese Frequenz verändert sich, wenn weitere Bauteile hinzukommen, bspw. ein Windenergieanlagenturm höher wird. Sie ist also erheblich vom Bauzustand abhängig.

Im Rahmen der vorliegenden Erfindung umfasst der Begriff der Eigenfrequenz im jeweiligen Zusammenhang die Eigenfrequenz eines Windenergieanlagenturms an sich bzw. die Eigenfrequenz einer Kombination von Turm und (Hilfs-) Fundament bzw. Einspannung, also im Wesentlichen die Eigenfrequenz des einseitig eingespannten bzw. befestigten Turms.

Kritisch wird eine Schwingungsanregung besonders dann, wenn sie sich im Frequenzbereich mit der Eigenfrequenz der Struktur überlagert und so zu Resonanzschwingungen führt, die die Struktur zerstören können.

Windenergieanlagen werden hauptsächlich durch den auftreffenden Wind zum Schwingen angeregt. Bei fertig errichteten, in Betrieb genommenen Anlagen treten Schwingungen des Turms vor allem in Reaktion auf die Belastung des Rotors durch den Wind auf. Bei Offshore-Windenergieanlagen muss zudem die Anregung aus der Meeresbewegung in Form von auftreffenden Wellen berücksichtigt werden.

Hauptursache für Schwingungen freistehender Turmrohbauten sind Wirbelablösungen, die sogenannten Karman'schen Wirbel, die zu wirbelerregten Querschwingungen (WEQ bzw. "vortex induced vibrations" - VIV) führen. Hierbei handelt es sich um eine Folge von Wirbelablösungen des den Turm umströmenden Windes bzw. Windfeldes, abwechselnd auf der in Windrichtung gesehen linken und rechten Seite des Turms. Die Schwingung des Turms und die Wirbelablösungen verstärken sich gegenseitig. Nach Aufsetzen des Maschinenhauses und Inbetriebnahme der Windenergieanlage ändert sich die Eigenfrequenz des Turms so, dass WEQ sich nur noch bei niedrigen Windgeschwindigkeiten mit der Turmeigenfrequenz überlagern und dann wenig kritisch sind.

Grundsätzlich sind die Eigenfrequenzen der gondellosen Türme höher als die vollständig montierter Anlagen. Es existieren dann Bedingungen, bei denen Anregungen durch Karman'sche Wirbel bei häufig vorkommenden Windgeschwindigkeiten WEQ induzieren. Entsprechend werden die Amplituden der Schwingungen größer, so dass die mechanischen und strukturellen Belastungen auf die Windenergieanlagentürme entsprechend wachsen.

Da die WEQ bei bestimmten Windgeschwindigkeiten auftreten, müssen Türme von Windenergieanlagen im Rohbauzustand ohne aufgesetztes Maschinenhaus ab einer bestimmten Länge entweder gesichert werden, beispielsweise durch Abspannungen, oder es müssen Maßnahmen zur Verhinderung von Wirbelablösungen getroffen werden. Anderenfalls können WEQ dazu führen, dass der Turm zerstört wird. Unterhalb einer kritischen Länge besteht diese Gefahr nicht oder nur in wesentlich geringerem Maße, da die Eigenfrequenzen der kürzeren Turmstümpfe mit wenigen Turmsektionen in einem höheren Frequenzbereich liegen, deren zugehörige hohe Windgeschwindigkeiten realistisch nicht erwartet werden müssen.

Eine kritische Windgeschwindigkeit, bei der wirbelerregte Querschwingungen für den Turmrohbau gefährlich sind, liegt für einen komplett errichteten Turm ohne Gondel, abhängig von seiner Höhe und seiner Steifigkeit, üblicherweise zwischen 10 m/s und 25 m/s, weshalb eine Errichtung unzulässig ist, wenn diese Windgeschwindigkeiten erwartet werden und nicht direkt die Gondel nach dem Hub des letzten Turmschusses gezogen werden kann.

Bei der Errichtung einer Windenergieanlage wird diesem Umstand dadurch Rechnung getragen, dass bei der Errichtung einer Windenergieanlage mit einem Turm bestehend aus mehreren Sektionen die letzte Sektion oder gegebenenfalls die letzten Sektionen des Turms und das Maschinenhauses auf den Turm in einem Wetterfenster mit ruhiger Witterung, vorzugsweise bei Windgeschwindigkeiten von max. 9 m/s, installiert bzw. aufgesetzt werden. Solche Wetterfenster müssen wenigstens einige Stunden oder Tage lang sein. Das Warten auf ein geeignetes Wetterfenster kann daher die Errichtung einer Windenergieanlage erheblich verzögern und dadurch hohe Kosten verursachen.

Die Folgen des Schwingungsproblems sind offshore stärker zu spüren als onshore. Im Gegensatz zu der sektionsweisen Errichtung von Onshore-Türmen werden Offshore-Türme in der Regel bereits im Hafen aus mehreren Turmsektionen mit einer senkrecht gestellten Längsachse zusammengesetzt und aus Platzgründen vorzugsweise aufrecht stehend auf einem Errichterschiff transportiert. Während des Transports sind die Türme oder Turmsektionen einer Anregung durch Wind bzw. Wellen ausgesetzt. Bereits hier können WEQ auftreten. Weiter sind die zur Errichtung geeigneten Wetterfenster offshore aufgrund von im Allgemeinen stetigeren und höheren Windgeschwindigkeiten kürzer, sodass in der Regel länger als onshore auf ein zur Errichtung geeignetes Wetterfenster gewartet werden muss, was wiederrum mit entsprechend hohen Mehrkosten für die Offshore-Baustelle verbunden ist.

Bei dem Transport auf einem Errichterschiff kommt hinzu, dass zusätzlich der Fahrtwind den ohnehin herrschenden Wind verstärken kann, so dass WEQ noch stärker auftreten können. Außerdem kann ein Turm oder eine Turmsektion zusätzlich zur Schwingung angeregt durch Rollbewegungen des Schiffes werden, die durch den Seegang bedingt sind. Errichterschiffe sind üblicherweise nicht mit einem eigenen Flüssigkeits-Rollmoment-Dämpfer ausgestattet, die diese Rollbewegungen dämpfen, zumal die Beladung mit den vertikalen Türmen bzw. Turmsektionen die Rollfrequenz so verschieben würde, dass ein solcher Dämpfer wenig Wirkung entfalten kann. Die Rollbewegung führt ebenfalls zu einem gewissen Luftzug an den Spitzen der Türme bzw. Turmsektionen.

Derzeit werden die Türme für Offshore-Windenergieanlagen in der Regel in zwei vormontierten Sektionen transportiert, die anschließend in zwei Hüben nacheinander auf die Gründungsstruktur bzw. auf die untere Turmsektion aufgesetzt und verbunden werden. Durch den geteilten Turmtransport sind die kritischen Windgeschwindigkeiten zur Anregung durch WEQ für die untere Sektion so hoch, dass sie nicht im kritischen Maße auftreten.

Wenn aber komplette Türme installiert werden sollen, um die Zeit für Offshore-Arbeiten zu verkürzen, liegen die kritischen Windgeschwindigkeiten aufgrund der erhöhten Turmhöhe dann unterhalb von 20 m/s, können also realistisch auftreten. Es müssen in diesem Fall zwingend Maßnahmen gegen WEQ getroffen werden.

Da Türme für Offshore-Windenergieanlagen in der Regel im Hafen zu einem aufrecht stehenden Turmrohbau vorinstalliert und/oder aufrecht stehend auf einem Installationsschiff transportiert werden, werden sie bislang aufgrund der WEQ ab einer bestimmten Länge entweder durch Abspannungen gesichert oder es werden Wendeln im oberen Turmbereich zur Verhinderung der Wirbelablösung angebracht, wie dies beispielsweise in WO 2006/106162 A2 bekannt ist. Das praxistaugliche Verwenden von Wendeln erfordert jedoch die Einhaltung bestimmter Kriterien bzgl. der Dicke der Wendeln sowie der Steigung der Wicklung. Der Aufwand für die Installation und die Deinstallation offshore dieser Wendeln ist erheblich.

In US 2012/063915 A1 ist eine Windenergieanlage mit einem an einer Strebe eines Turmsegments aufgehängten Schwingungsdämpfer offenbart. Auch KR 101 287 140 B1 offenbart eine Windenergieanlage mit einem oben im Turm angeordneten Schwingungsdämpfer.

Weiterhin betrifft EP 1 065 374 A2 ein Verfahren zur Reduzierung von Schwingungen von Bauteilen in Windkraftanlagen unter gleichzeitiger Körperschallisolierung. Die darin genannten Windkraftanlagen besitzen elastomere Lager mit stark dämpfenden Eigenschaften, aber geringer Federsteifigkeit.

JP H07 81874 A zeigt eine Hebevorrichtung mit einem Schwingungsdämpfungssystem.

Ausgehend von diesem Stand der Technik liegt der vorliegenden Erfindung daher die Aufgabe zugrunde, den Transport und die Errichtung von Windenergieanlagentürmen, insbesondere offshore, effizienter und insbesondere unabhängiger vom Wetter zu gestalten.

Diese der Erfindung zugrunde liegende Aufgabe wird durch ein Lastaufnahmemittel für einen Turm oder eine Turmsektion einer Windenergieanlage gelöst, das Turmbefestigungsmittel zur Befestigung an einem oberen Ende oder im Bereich eines oberen Endes eines Turms oder einer Turmsektion einer Windenergieanlage und Befestigungspunkte zur Befestigung wenigstens eines Anschlagmittels eines Hebezeugs aufweist, das dadurch weitergebildet ist, dass das Lastaufnahmemittel wenigstens einen Schwingungsdämpfer umfasst oder wenigstens ein Schwingungsdämpfer am Lastaufnahmemittel, insbesondere lösbar und/oder austauschbar, befestigt ist, dessen Dämpfungsfrequenz im Bereich einer Eigenfrequenz eines oder einer eingespannten oder frei stehenden gondellosen Turms oder Turmsektion liegt.

Zur Begriffsdefinition im Rahmen der vorliegenden Anmeldung wird unterschieden zwischen dem Hebezeug und Lastaufnahmeeinrichtungen. Als Hebezeug werden Geräte zum Heben und Bewegen von Lasten bezeichnet. Hierunter fallen unter anderem Kräne, aber auch Aufzugsanlagen, Hebebäume, Hebebühnen, Hubbrücken, Kettenzüge, Ladebäume, Seilzüge u.a.

Lastaufnahmeeinrichtungen bilden ein Verbindungsglied zwischen dem Hebezeug, beispielsweise einem Kran, und dem Transportgut. Der Begriff Lastaufnahmeeinrichtung fasst die Begriffe Tragmittel, Anschlagmittel und Lastaufnahmemittel zusammen. Das Tragmittel ist dauernd mit dem Hebezeug, bspw. Kran, verbunden, beispielsweise Kranhaken sowie fest eingescherte Greifer oder Traversen. Anschlagmittel sind kein Teil des Hebezeugs. Hierbei handelt es sich beispielsweise um Endlosseile, Hebebänder, Hakenketten, Seilgehänge und lösbare Verbindungsteile wie beispielsweise Schäkel.

Lastaufnahmemittel schließlich sind ebenfalls kein Teil des Hebezeugs und dienen als eine Art Adapter zwischen Transportgütern, die keine eigenen Anschlagpunkte bzw. Befestigungspunkte für Anschlagmittel oder Tragmittel haben, und den Anschlagmitteln bzw. Tragmitteln. Lastaufnahmemittel sind beispielsweise in einfachen Fällen Haken, Pfannen, Greifer, aber auch Lasthebemagnete oder Vakuumheber. Im erfindungsgemäßen Fall großer Transportgüter fallen unter den Begriff Lastaufnahmemittel beispielsweise Traversen, Spreizer ("Spreader"), gekreuzte Traversen oder ähnliche, die einerseits zur Befestigung an der Oberseite oder Oberkante einer Turmsektion oder eines Turms einer Windenergieanlage ausgebildet sind und andererseits Befestigungspunkte bzw. Anschlagpunkte für Anschlagmittel oder Tragmittel eines Krans haben.

Bei der Errichtung von Windenergieanlagen bzw. deren Türmen ist zwischen dem Tragmittel des verwendeten Krans und dem Lastaufnahmemittel üblicherweise auch ein Anschlagmittel, beispielsweise ein Seilgehänge oder eine Konstruktion mit Hakenketten im Einsatz.

Die Erfindung beruht auf der Grundidee, einen Schwingungsdämpfer in das Lastaufnahmemittel für den Turm fix oder lösbar bzw. austauschbar zu integrieren. Dadurch erhöht sich die Anzahl der erforderlichen Hübe nicht, d.h. der Zeitaufwand für die Hübe bleibt unverändert. Das leicht erhöhte Gewicht des Lastaufnahmemittels, im Allgemeinen nicht mehr als 10 t, fällt bei dem Gewicht des Windenergieanlagenturms nicht substantiell ins Gewicht. Der Schwingungsdämpfer ist dabei so gestaltet, dass er den erwarteten Frequenzbereich der Eigenfrequenz für den jeweiligen Turm bzw. die jeweilige Turmsektion oder im Optimalfall für alle zu erwartenden Türme abdeckt. Dabei ist die Art der Einspannung bzw. des Transport zu berücksichtigen, beispielsweise der aufrechte Transport auf einem Errichterschiff.

Im Rahmen der Erfindung umfasst das Merkmal eines "frei stehenden" gondellosen Turmes bzw. einer "frei stehenden" gondellosen Turmsektion jegliche Art des Stehens, d.h., auch den auf einem Hilfsfundament und/oder auf einem Schiff stehenden Turm bzw. Turmsektion. Eine Einspannung verhindert im Allgemeinen, dass ein Turm oder eine Turmsektion während des Transports umkippt, verhindert Schwingungen des Turms jedoch nicht.

Ein Schwingungsdämpfer entzieht der Turmschwingung Energie, die in eine Schwingung einer gegenüber dem Turm beweglich aufgehängten oder gelagerten schwingenden Masse einfließt. Bei der schwingenden Masse kann es sich beispielsweise um eine Pendelmasse, eine an Federn aufgehängte Masse oder eine Flüssigkeit handeln. Idealerweise hat die Schwingung der schwingenden Masse bei einer bestimmten Frequenz, die einer Eigenfrequenz eines Turms, eines Turmstumpfes oder einer Turmsektion entspricht oder ihr nahekommt, eine Phasenverschiebung von 180° gegenüber der Schwingung des Turms selbst. So ist die maximale Schwingungsenergie aus dem Turm in den Schwingungsdämpfer abgeleitet, was eine maximale Dämpfung der Turmschwingung bewirkt. Oberhalb und unterhalb der Frequenz maximaler Dämpfung ist die Phasenverschiebung mehr oder weniger als 180°, so dass die dämpfende Wirkung nachlässt.

Die Erfindung ist sowohl bei im Ganzen zu errichtenden Türmen als auch bei Türmen, die aus einzelnen oder aus mehreren vorab miteinander verbundenen Turmsektionen errichtet werden, anwendbar. Die folgenden Ausführungen gelten daher in gleicher Weise für Türme wie für Turmsektionen, die mit einem erfindungsgemäßen Lastaufnahmemittel verbunden werden.

Wenn der Schwingungsdämpfer lösbar bzw. austauschbar in das Lastaufnahmemittel integrierbar ist, ist es beispielsweise möglich, eine größere Anzahl von Lastaufnahmemitteln bereit zu halten, die zur Aufnahme eines Schwingungsdämpfers ausgebildet sind, und eine kleinere Anzahl von Schwingungsdämpfern. Beispielsweise bei Offshore-Windenergieanlagen können die zu installierenden Turmsektionen oder Türme dann bereits im Hafen mit den Lastaufnahmemitteln bestückt werden, die erst vor Ort auf dem Errichterschiff oder einer Errichterplattform mit einem Schwingungsdämpfer bestückt werden.

Der Dämpfer wird in ein vorhandenes System integriert, da die Errichtung von Windenergieanlagentürmen bereits seit längerem mithilfe von Großkränen erfolgt, deren Anschlagmittel an ein Lastaufnahmemittel angesetzt werden, das mit der Oberseite des aufzurichtenden bzw. anzuhebenden Turmes oder der aufzurichtenden bzw. anzuhebenden Turmsektion verbunden ist. Die gewohnten Abläufe werden daher erfindungsgemäß nicht geändert.

Mit der Aufnahme eines Schwingungsdämpfers in das Lastaufnahmemittel für den Turm bzw. für die Turmsektion wird ein bereits üblicherweise verwendetes Element mit einer neuen Funktion versehen, nämlich der Schwingungsdämpfung eines gondellosen freistehenden Windenergieanlagenturms. Das Lastaufnahmemittel ist funktionsbedingt an der Spitze des Turms angeordnet und somit an der idealen Position, um einen Schwingungsdämpfer anzuordnen, der Schwingungen in der Eigenfrequenz des Turms dämpfen kann. Das erfindungsgemäße Lastaufnahmemittel verbleibt so lange auf der Spitze des errichteten Turms, bis eine Windenergieanlagengondel bzw. ein Maschinenhaus auf dem Turm aufgesetzt wird. Auch wenn aufgrund eines plötzlichen Wetterumschwungs das Maschinenhaus nicht unverzüglich aufgesetzt werden kann, kann der Turm mit dem in das Lastaufnahmemittel integrierten Dämpfer zusammen, ohne eine Gefahr der Beschädigung durch WEQ, stehen bleiben.

Das Lösen und Entfernen des Lastaufnahmemittels ist ein bereits bei herkömmlichen Verfahren und herkömmlichen Lastaufnahmemitteln für Windenergieanlagentürme vorhandener Verfahrensschritt, der also keine zusätzliche Zeit kostet. Da die Abhängigkeit von geeigneten Wetterfenstern reduziert wird, führt dies zu einer größeren zeitlichen Flexibilisierung des Vorgangs. Bei ungünstigem Wetter ist es so möglich, parallel andere Vorgänge auszuführen, beispielsweise eine Errichtung anderer Türme in einem Offshore-Windpark mittels Versetzen eines Errichterschiffs. Auf diese Weise ist es möglich, die Limitation der vollständigen Errichtung einer einzelnen Windenergieanlage eines Windenergieanlagenparks bei schlechtem Wetter, welche alle anderen Arbeiten behindert, abzuschaffen. Somit können auch vergleichsweise kurze Wetterfenster genutzt werden, um beispielsweise nur den Turm zu errichten. Die Anlage kann dann mit aufgesetztem Lastaufnahmemittel und Schwingungsdämpfer im Bauzustand belassen und bei geeigneter Wetterlage weiter errichtet werden.

Vorzugsweise ist der Schwingungsdämpfer als Schwappdämpfer, als Tuned Liquid Column Dämpfer (TLCD), als Pendeldämpfer mit oder ohne viskose Flüssigkeit oder als Feder-Masse-Dämpfer ausgebildet oder umfasst mehrere Schwingungsdämpfer gleichen oder unterschiedlichen Typs.

Die Flüssigkeitsdämpfer, also der Schwappdämpfer und der Tuned Liquid Column Dämpfer (TLCD), sind jeweils vorzugsweise geschlossen ausgebildet, da der Schwingungsdämpfer mit dem Lastaufnahmemittel gekippt wird, um ihn an einen liegenden Turm bzw. an eine liegende Turmsektion anzuschließen. Ein TLCD benötigt im Vergleich zu einem Schwappdämpfer, dessen dämpfungsrelevante Teile im Wesentlichen aus einer Wanne mit einer Flüssigkeit, beispielsweise Salzwasser, bestehen, weniger Masse bzw. Wasser, da in einer im Wesentlichen "U"-förmig gebogenen Röhre die gesamte Wassersäule schwingt und eine höhere Schwingungsamplitude erreicht als im Schwappdämpfer. Ein Schwappdämpfer hat allerdings auch eine geringere Bauhöhe als ein TLCD, was bei beengten Platzverhältnissen im Lastaufnahmemittel vorteilhaft ist.

In einer vorteilhaften Weiterbildung ist vorgesehen, dass mehrere Schwingungsdämpfer, insbesondere mehrere Schwingungsdämpfer mit unterschiedlichen Dämpfungsfrequenzen, vorgesehen sind. Die Auswahl unterschiedlicher Dämpfungsfrequenzen mehrerer Schwingungsdämpfer ermöglicht eine breitbandige Dämpfung von Schwingungen des gondellosen freistehenden Turms bzw. Turmrohbaus. Gleichzeitig wird dadurch der Bereich an Windenergiegeschwindigkeiten vergrößert, in dem WEQ gedämpft werden. Damit werden die Witterungsbedingungen, unter denen die Türme gondellos frei stehen können, weiter gefasst, so dass auch die Intervalle zwischen der Errichtung des Turms und dem Aufsetzen und Montieren eines Maschinenhauses vergrößert werden können, ohne dass weitere Sicherungsmaßnahmen erforderlich wären, die die Errichtung weiterer Windenergieanlagen verzögern würden.

Die Dämpfungsfrequenz oder Dämpfungsfrequenzen des Schwingungsdämpfers oder der Schwingungsdämpfer liegt oder liegen vorteilhafterweise zwischen 0,2 und 1,5 Hz, insbesondere zwischen 0,5 und 1,0 Hz. Dieser Bereich ist im Wesentlichen oberhalb des Bereichs der typischen Eigenfrequenzen von fertiggestellten Windenergieanlagen. In dem Fall liegen die Frequenzen der Eigenschwingungen bei Offshore-Windenergieanlagen oftmals unterhalb von 0,3 Hz.

Vorzugsweise umfasst das Lastaufnahmemittel eine Traverse, ein Traversenkreuz oder eine, insbesondere runde oder quadratische, Platte mit Adapterstücken, die auf verschiedenen Türmen oder Turmsektionen montierbar ist.

Vorteilhafterweise ist ein Spreizer im Lastaufnahmemittel umfasst. Ein Spreizer oder "Spreader" dient zur Ausbreitung der Anschlagmittel, also beispielsweise eines an einem zentralen Punkt zusammenlaufenden Bündels von Ketten oder Seilen, die unterhalb des Spreizers im Wesentlichen parallel geführt werden können. Damit nimmt der Spreizer radial nach innen wirkende Kräfte auf, die durch den Schwerkraftzug auf die ansonsten schräg hängenden Anschlagmittel, insbesondere Ketten oder Seile, auftreten und ggf. den Turm, der einen runden Querschnitt hat, belasten würden. Der Spreizer entlastet auch den mit dem Turm bzw. der Turmsektion verbundenen Teil des Lastaufnahmemittels.

Um verschiedene Türme oder Turmsektionen in unterschiedlichen Bauzuständen und/oder Transportzuständen sichern zu können, ist vorteilhafterweise eine Eigenfrequenz des wenigstens einen Schwingungsdämpfers an verschiedene Bauzustände, Transportzustände, Türme und/oder Turmsektionen anpassbar. Dies bedeutet eine Verstimmung bzw. Verstimmbarkeit der Schwingungsdämpfers, beispielsweise durch Einbauteile, beispielsweise Schottbleche in Schwappdämpfern, zusätzlichen Federn in Masse-Feder-Dämpfern etc. Diese Maßnahme ist auch nützlich, um beispielsweise unterschiedlichen Anregungsspektren während des Transports und während und nach der Errichtung von Offshore-Tragstrukturen zu begegnen. Entsprechende Maßnahmen für verschiedene Dämpfertypen sind auch in der deutschen Patentanmeldung mit dem Titel "Verfahren zum Errichten einer Windenergieanlage und Windenergieanlage" der Anmelderin mit enthalten, die denselben Anmeldetag wie die vorliegende Patentanmeldung hat und deren Offenbarungsgehalt vollinhaltlich durch Bezug in die vorliegende Patentanmeldung aufgenommen sein soll.

Zur Anpassung der Eigenschwingungsfrequenz des wenigstens einen Schwingungsdämpfers wird bei einem Schwappdämpfer vorzugsweise ein zusammenhängendes Schwappvolumen verändert, insbesondere mittels Einsatz oder Entnahme von Schottblechen, wobei zur Vergrößerung des Schwappvolumens ein oder mehrere, insbesondere alle, Schottbleche aus Führungsschienen in einem Gesamtvolumen des Schwappdämpfers entfernt werden, so dass aus mehreren kleinen Schwappkammern jeweils eine größere Schwappkammer entsteht. In kleinen Schwappvolumen, auch Schwappkammern oder Schwappbecken genannt, schwingt die Flüssigkeit schneller, bei Vergrößerung des Schwappvolumens ist die Schwingungsfrequenz entsprechend größer. Ebenfalls vorteilhaft wird zur Anpassung der Eigenschwingungsfrequenz des wenigstens einen Dämpfers bei einem Tuned Liquid Column Dämpfer mit zwei Steigrohren ein Luftfedereffekt einer Luftsäule über der Flüssigkeit in wenigstens einem Steigrohr des Schwingungsdämpfers verringert oder verstärkt, insbesondere durch Öffnen oder Schließen eines Ventils oder einer Absperrklappe.

In einem Fall, dass ein Feder-Massedämpfer oder ein Pendeldämpfer in Kombination mit Federn an der Pendelmasse eingesetzt wird, ist vorzugsweise vorgesehen, dass zur Anpassung der Eigenschwingungsfrequenz des wenigstens einen Dämpfers die Anzahl der Federn geändert wird und/oder eingesetzte Federn durch Federn mit einer geringeren oder stärkeren Federkraft ersetzt werden. Weiterhin kann auch ein Pendeldämpfer mit einer viskosen Dämpfung eingesetzt werden. Bei einem Pendeldämpfer wird zur Anpassung der Eigenschwingungsfrequenz des wenigstens einen Dämpfers vorzugsweise die Pendellänge vergrößert oder verkleinert, wobei die Pendellänge insbesondere durch Abknicken an Trägern eingestellt wird, die an der Turmwand angeordnet sind, oder durch Fixieren von Kettengliedern.

Vorteilhafterweise ist der Schwingungsdämpfer, insbesondere austauschbar, zwischen einem oberen Hebegerüst und einem unteren Hebegerüst angeordnet oder alternativ fest mit einem einzigen Hebegerüst verbunden. In der ersten Alternative können die oberen und unteren Hebegerüste auch rundum an mehreren Stellen miteinander verbunden sein. Die unteren und oberen Hebegerüste bilden somit einen Rahmen und ein Lager für den oder die Schwingungsdämpfer und sind vorteilhafterweise austauschbar miteinander kombinierbar. In der zweiten Alternative weist die Anordnung nur ein einzelnes Hebegerüst auf, auf dem der Schwingungsdämpfer angeordnet ist.

Ein Gehäuse des Schwingungsdämpfers oder der Schwingungsdämpfer ist vorteilhafterweise tragender Teil des Lastaufnahmemittels, wodurch eine Gewichtsreduktion des Lastaufnahmemittels möglich ist.

Turmsektionen werden häufig mit einem Transportrahmen transportiert und werden auch sektionsweise mit dem Transportrahmen errichtet bzw. aufgerichtet. In diesen Fällen wird der Transportrahmen erst nach der Errichtung bzw. Aufrichtung entfernt und das Lastaufnahmemittel, das die fertig aufeinander montierten Turmsektionen tragen kann und erfindungsgemäß den Dämpfer umfasst, aufgesetzt. Das untere Hebegerüst ist somit vorteilhafterweise als Transportrahmen ausgebildet, auf dem das obere Hebegerüst mit dem Schwingungsdämpfer aufsetzbar und befestigbar ist, um das gesamte erfindungsgemäße Lastaufnahmemittel zu bilden.

In einer ersten vorteilhaften Variante weist das obere Hebegerüst Befestigungspunkte für ein Anschlagmittel auf. Damit hat das obere Hebegerüst die Aufgabe, die Gewichtskraft des Turms an das Anschlagmittel und das Hebezeug zu übertragen und außerdem den Dämpfer und das untere Hebegerüst zu tragen.

Alternativ ist es ebenfalls vorteilhaft möglich, dass das obere Hebemittel Anschlagpunkte und das untere Hebemittel Befestigungspunkte für ein Anschlagmittel aufweist. In diesem Fall bilden die Anschlagpunkte des oberen Hebemittels lediglich Führungen für das Anschlagmittel, das ansonsten an den Befestigungspunkten am unteren Hebemittel befestigt ist. Somit trägt in diesem Fall das untere Hebegerüst den Turm und den Dämpfer und gibt die Gewichtskraft des Turms an das Anschlagmittel und das Hebezeug und dessen Tragmittel weiter.

In einer vorteilhaften Weiterbildung sind die Anschlagpunkte und die Befestigungspunkte gegeneinander versetzt angeordnet. Dies bedeutet, dass zwischen dem oberen Hebegerüst und dem unteren Hebegerüst die einzelnen Züge des Anschlagmittels, beispielsweise die Kettenteile oder Seilteile, nicht gerade nach unten (im aufgerichteten Zustand des Turms) bzw. in Richtung der Turmachse angeordnet sind, sondern durch ihre Schrägführung auch noch zur Aufnahme von Querkräften angeordnet sind. Dadurch wird eine stabilere Halterung des am Hebezeug aufgehängten Turms bzw. der Turmsektion erreicht.

Da der so errichtete Turm bzw. die so errichtete Turmsektion ggf. auch über einen längeren Zeitraum ohne Maschinenhaus stehen kann, ist in einer vorteilhaften Weiterbildung vorgesehen, dass wenigstens ein Teil des Lastaufnahmemittels als Deckel für den Turm oder die Turmsektion ausgebildet ist, und insbesondere wenigstens eine Turmluke für einen Zugang zum Inneren des Turms oder der Turmsektion aufweist. Damit ist der Turm bzw. die Turmsektion vor Regen geschützt und das Innere des Turms bzw. der Turmsektion ist noch immer für Wartungs- oder Baupersonal zugänglich.

Die der Erfindung zugrunde liegende Aufgabe wird auch durch ein Verfahren zum Errichten einer Windenergieanlage, insbesondere einer Offshore-Windenergieanlage, mit den folgenden Verfahrensschritten gelöst:
a) ein Turm oder eine Turmsektion wird an seinem oder ihrem in Bezug auf den aufgerichteten Zustand oberen Ende mit einem Lastaufnahmemittel verbunden,
b) ein Anschlagmittel eines Hebezeugs wird mit dem Lastaufnahmemittel verbunden,
c) der Turm oder die Turmsektion wird aufgerichtet und/oder angehoben,
d) gegebenenfalls werden im Falle eines Turms aus mehreren Turmsektionen die Turmsektionen nacheinander aufeinander gesetzt und miteinander zu dem Turm verbunden,
e) im aufgerichteten Zustand des Turms oder der Turmsektion wird das Lastaufnahmemittel entfernt,
f) nach Entfernung des Lastaufnahmemittels vom vollständig errichteten Turm wird eine Windenergieanlagengondel auf den Turm aufgesetzt,
wobei das Verfahren erfindungsgemäß dadurch weitergebildet ist, dass im aufgerichteten Zustand des Turms und/oder der Turmsektionen Schwingungen des Turms oder der Turmsektionen durch einen oder mehrere Schwingungsdämpfer in oder an dem Lastaufnahmemittel gedämpft werden.

Das "obere Ende" aus Verfahrensschritt a) befindet sich im fertig errichteten Zustand mit vertikaler Turmlängsachse oben, also in Richtung zum Maschinenhaus.

Der Verfahrensschritt d) entfällt bei der Errichtung eines ganzen Turmes in einem Hub. Die Verfahrensschritte e) und f) verzögern sich, wenn das Maschinenhaus nicht direkt im Anschluss an die Turmerrichtung montiert werden kann (bspw. aufgrund eines Wetterumschwungs).

Hierdurch wird es, wie oben beschrieben, möglich, den einmal errichteten, aber noch gondellosen freistehenden Turm bzw. die Turmsektion über einen längeren Zeitraum frei stehen zu lassen, da die Standsicherheit auch bei stärkerem Wind oder schlechterer Witterung ausreichend ist. Dadurch wird es möglich, die Abläufe beim Errichten von Windenergieanlagen sowohl onshore als auch offshore zu verbessern und eine größere Anzahl von Windenergieanlagen in kürzerer Zeit parallel zu errichten.

Vorteilhafterweise wird das Lastaufnahmemittel bereits vor einem Transport, insbesondere einer Verschiffung, des Turms oder der Turmsektion mit dem Turm oder der Turmsektion verbunden.

Ebenfalls bevorzugt wird der Turm bereits vor einem Transport, insbesondere einer Verschiffung, aus zwei oder mehr Turmsektionen zusammengesetzt und mit einem Lastaufnahmemittel, wie vorstehend beschrieben, gemäß der Erfindung verbunden.

Vorteilhafterweise wird eine Eigenfrequenz des wenigstens einen Schwingungsdämpfers an verschiedene Transportzustände, Bauzustände, Türme und/oder Turmsektionen angepasst, beispielsweise durch bauliche Maßnahmen, wie Einsatz von Schottblechen in Schwappdämpfern, Änderung der Federstärken in Masse-Feder-Dämpfern u.a. Diese Maßnahme ist, zusätzlich zur veränderten Eigenfrequenz des Turms in verschiedenen Bauzuständen, u.a. vorteilhaft für den Fall, dass während des Transports und bei fertig errichteten offshore-Tragstruktur unterschiedliche Anregungen, beispielsweise durch Seegang, zu erwarten sind.

Mit dem erfindungsgemäßen Verfahren werden die gleichen Vorteile, Eigenschaften und Merkmale verwirklicht, wie mit dem erfindungsgemäßen Lastaufnahmemittel.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig.1: eine schematische Darstellung einer Windenergieanlage,
- Fig. 2: eine schematische Darstellung eines liegenden Turmes einer Windenergieanlage,
- Fig. 3a) bis c): aufeinanderfolgende Schritte bei der Errichtung einer Windenergieanlage,
- Fig. 4: eine schematische Darstellung eines erfindungsgemäßen Lastaufnahmemittels,
- Fig. 5: eine weitere schematische Detaildarstellung eines erfindungsgemäßen Lastaufnahmemittels,
- Fig. 6: eine schematische Darstellung eines weiteren erfindungsgemäßen Lastaufnahmemittels und
- Fig. 7: eine Draufsicht auf ein erfindungsgemäßes Lastaufnahmemittel in schematischer Darstellung.

In den Zeichnungen sind jeweils gleiche oder gleichartige Elemente und/oder Teile mit denselben Bezugsziffern versehen, so dass von einer erneuten Vorstellung jeweils abgesehen wird.

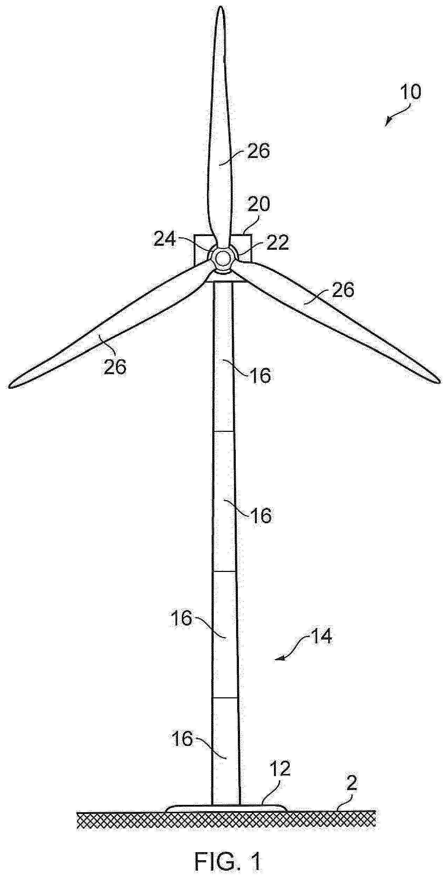

Fig. 1 zeigt eine gattungsgemäße Windenergieanlage 10, in diesem Fall eine Onshore-Windenergieanlage, die auf einem Untergrund 2 steht. Bei Offshore-Windenergieanlagen ist der Untergrund 2 unter Wasser, so dass ein Unterbau vorhanden ist, der im Untergrund 2 gegründet ist und oberhalb des Wasserspiegels endet. Auf diesem Unterbau ist dann ein Turm 14 errichtet.

Bei der in Fig. 1 gezeigten Onshore-Windenergieanlage ist der oberflächliche Teil einer Gründung 12 bzw. eines Fundaments auf dem Untergrund 2 erkennbar, auf dem ein Turm 14 mit vier Turmsektionen 16 errichtet ist. Der Turm 14 kann sich nach oben hin verjüngen , einen konstanten Durchmesser oder auch Knickstellen in der Kontur aufweisen, d.h. dass der Turm so ausgeführt ist, dass er nach einer Verjüngung im unteren Bereich sich im oberen Bereich nach oben hin aufweitet. An der Spitze des Turms 14 ist ein Maschinenhaus 20 angeordnet, wobei in Fig. 1 eine Frontalansicht auf eine Windenergieanlage 10 mit einem Rotor gezeigt ist, der eine Rotornabe 22 mit einer auch "Spinner" 24 genannten Abdeckung und drei Rotorblätter 26 aufweist.

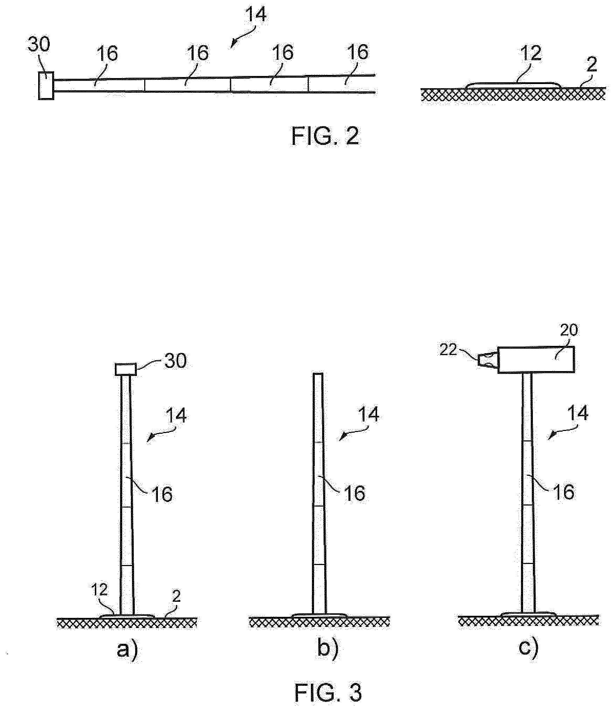

Die Errichtung einer solchen Windenergieanlage 10 wird in den folgenden Fig. 2 und 3 beispielhaft erläutert. Ein Kran ist der Übersichtlichkeit halber in den Fig. 2 und 3 nicht dargestellt.

In Fig. 2 ist ein Turm 14 mit den vier Turmsektionen 16 liegend in der Nähe der Gründung 12 für die Windenergieanlage abgelegt dargestellt. An seiner Spitze ist bereits ein Lastaufnahmemittel 30 angeordnet, das den Turm 14 in seinem kreisförmigen Querschnitt stützt und Befestigungspunkte für Anschlagmittel eines Krans bzw. Hebezeugs aufweist.

Vorzugsweise werden die Turmsektionen 16, anders als in Fig. 2 schematisch vereinfacht gezeigt, einzeln in eine Position mit senkrechter Längsachse aufgerichtet und aufeinander montiert. Das Lastaufnahmemittel stützt in diesem Fall lediglich die oberste Turmsektion in der liegenden Position. Für das Aufrichten und Aufeinandersetzen der einzelnen Turmsektionen 16 können auch herkömmliche Lastaufnahmemittel bzw. Anschlagmittel, beispielsweise bestehend aus Anschlagklotz, Schäkeln und Hebebändern, verwendet werden. Das Lastaufnahmemittel 30 würde dann lediglich für das Heben des kompletten Turmes 14 bzw. der obersten Turmsektion 16 eingesetzt und bis zur Errichtung an der Spitze des Turmes 14 verbleiben.

In Fig. 3a) ist gezeigt, dass der Turm 14 mit dem Lastaufnahmemittel 30 an seiner Spitze vollständig auf der Gründung 12 montiert ist. Das Lastaufnahmemittel 30 verbleibt vorerst an der Spitze des Turms 14. Da es sich um ein erfindungsgemäßes Lastaufnahmemittel 30 mit einem (nicht dargestellten) Schwingungsdämpfer handelt, kann der gondellose Turm aus Fig. 3a) im Wesentlichen ungefährdet stehen bleiben. Eine sofortige Fertigstellung durch Aufsetzen einer Gondel bzw. eines Maschinenhauses ist in diesem Fall nicht erforderlich. Die Situation bei Offshore-Anlagen ist im Wesentlichen die gleiche wie bei der in den Fig. 2 und 3 gezeigten Onshore-Windenergieanlage 10. Bei der Verwendung des erfindungsgemäßen Lastaufnahmemittels 30 in Verbindung mit der Errichtung von Offshore-Windenergieanlage können die zusammengesetzten Türme aufrecht stehend und mit dem Lastaufnahmemittel 30 versehen im Basishafen gelagert werden.

Anstelle der Errichtung des Turms 14 in einem Zug, wie in den Fig. 2 und 3 dargestellt, können die einzelnen Turmsektionen 16 im Rahmen der Erfindung auch nacheinander aufgerichtet und aufeinander montiert werden, so dass der Turm 14 der Windenergieanlage 10 in mehreren Hüben zusammengesetzt und fertiggestellt wird.

In Fig. 3b) ist in Vorbereitung des Aufsetzens eines Maschinenhauses 20 das Lastaufnahmemittel 30 entfernt worden. In diesem Zustand ist der Turm 14 gegen windangeregte Querschwingungen WEQ empfindlich, so dass nur ein kurzes Zeitfenster verbleibt, um ein Maschinenhaus 20 aufzusetzen. Dies ist in der in Fig. 3c) dargestellten Situation bereits geschehen. Hier wird durch das sehr schwere Maschinenhaus 20 mit der Rotornabe 22 die Eigenfrequenz der Anlage so verschoben, dass sie unter realistisch auftretenden Bedingungen außerhalb des Frequenzbereichs von WEQ liegt. Die Rotorblätter selber sind noch nicht montiert.

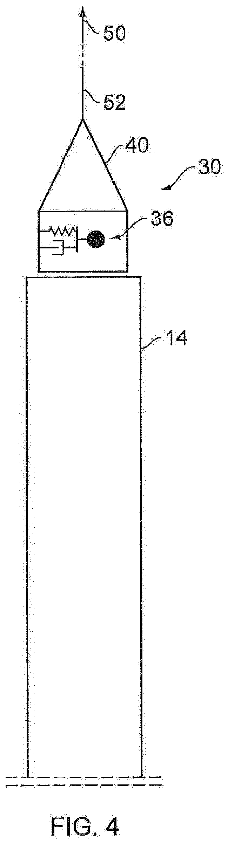

Fig. 4 zeigt ein erstes Ausführungsbeispiel eines erfindungsgemäßen Lastaufnahmemittels 30 in einer schematischen Übersichtsdarstellung. Das Lastaufnahmemittel 30 ist an einem Anschlagmittel 40 befestigt, das seinerseits mit einem Tragmittel 52 eines nur angedeuteten Hebezeugs 50, beispielsweise eines Krans, verbunden ist. An seiner Unterseite ist das Lastaufnahmemittel 30 mit einem an ihm hängenden Turm 14 einer Windenergieanlage verbunden. Der Turm ist nur mit seinem oberen Teil dargestellt.

Das Lastaufnahmemittel 30 umfasst einen als Feder-Masse-Dämpfer ausgebildeten Schwingungsdämpfer, dessen schematisch angedeutete Bestandteile in den folgenden Figuren beschrieben werden. Der Schwingungsdämpfer 36 dämpft WEQ des Turms 14, insbesondere im Frequenzbereich des ersten Turmbiegemoments.

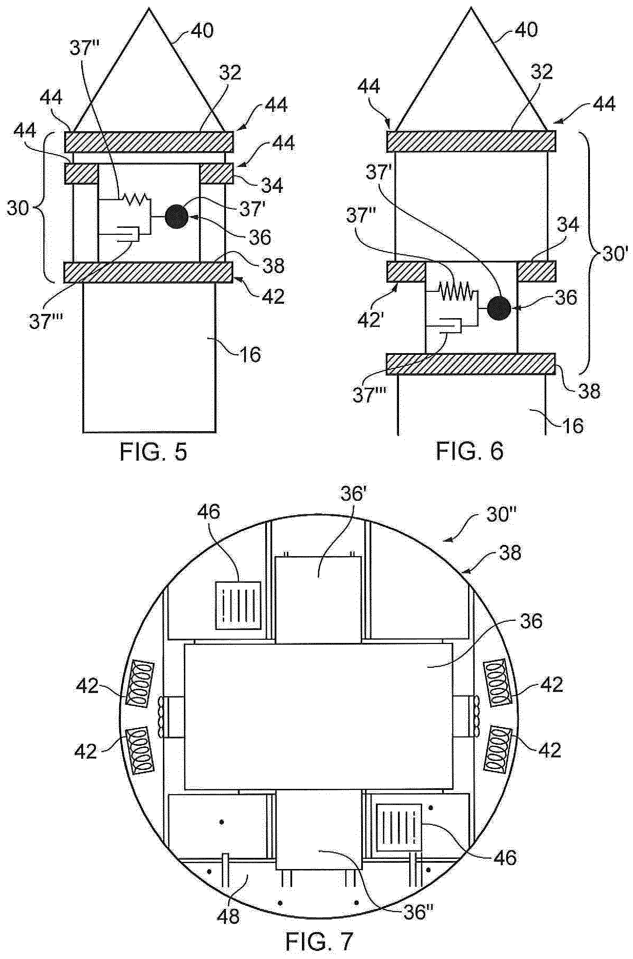

In Fig. 5 ist ein Ausschnitt aus Fig. 4 vergrößert dargestellt. Die geschweifte Klammer zur Bezugsziffer 30 deutet die zu diesem Ausführungsbeispiel gehörenden Elemente des Lastaufnahmemittels 30 an. Dies sind ein zuoberst angeordneter Spreizer 32, ein oberes Hebegerüst 34, der in Fig. 4 bereits vorgestellte, als Feder-Masse-Dämpfer ausgebildete Schwingungsdämpfer 36 und ein unteres Hebegerüst 38. Der Schwingungsdämpfer 36 ist zwischen dem oberen Hebegerüst 34 und dem unteren Hebegerüst 38 angeordnet, wobei das untere Hebegerüst 38 außerdem noch mit der Oberkante bzw. dem oberen Bereich einer Turmsektion 16, wahlweise eines Turms 14, verbunden ist.

Der Feder-Masse-Dämpfer umfasst eine schwingende Masse 37^{I}, die an Federn 37^{II} aufgehängt ist. Außerdem ist ein viskoses Dämpfungsglied 37^{III} vorgesehen, das die Schwingung der Masse 37^{I} dämpft. Die Dämpfungsfrequenz des Schwingungsdämpfers 36 ist, bei fest gewählter Masse 37^{I}, durch die Wahl der Federstärke und/oder Anzahl der Federn 37" und durch das Ausmaß der Dämpfung durch das Dämpfungsglied 37^{III} auswählbar und/oder anpassbar, so dass die Dämpfungsfrequenz des Schwingungsdämpfers 36 beispielsweise für verschiedene Baustadien des Turmrohbaus oder für verschiedene Turmsektionen anpassbar ist.

Als Anschlagmittel 40 ist ein Anschlagseil oder eine Anschlagkette mit zwei in einem oberen Punkt zusammenlaufenden Geschirren dargestellt. Am oberen Punkt, an dem die einzelnen Seile bzw. Ketten zusammenlaufen, ist das Anschlagmittel 40 beispielsweise an einem nicht dargestellten Kranhaken angeschlagen bzw. befestigt. Die einzelnen Seile bzw. Ketten des Anschlagmittels 40 verlaufen durch Anschlagpunkte 44 im Spreizer 32 und im oberen Hebegerüst 34 und setzen sich fort bis zu Befestigungspunkten 42 im unteren Hebegerüst 38. In diesem Fall wird das Gewicht der Turmsektion 16 in den Befestigungspunkten 42 im unteren Hebegerüst 38 in das Anschlagmittel 40 eingeleitet. Der Schwingungsdämpfer 36 und das obere Hebegerüst 34 liegen auf dem unteren Hebegerüst 38 auf, das deren Gewicht zusätzlich trägt und in das Anschlagmittel 40 einleitet.

Der Spreizer 32 kann entweder mit Abstandhaltern von dem oberen Hebegerüst 34 beabstandet sein oder an bestimmten Stellen des Anschlagmittels 40 befestigt sein.

Die Anschlagpunkte 44 einerseits und die Befestigungspunkte 42 andererseits sind vorteilhafterweise gegeneinander versetzt, so dass Anschlagmittel 40 zwischen dem Spreizer 32 bzw. dem oberen Hebegerüst 34 einerseits und dem unterem Hebegerüst 38 andererseits nicht gerade nach unten in Schwerkraftrichtung verlaufen, wenn der Turm bereits aufgerichtet und angehoben ist, sondern schräg dazu. Damit werden Querkräfte, die auf den Turm 14 bzw. die Turmsektion 16 wirken, besser abgefangen, da sie sich in eine Zugspannung des Anschlagmittels 40 übersetzen. Diese werden besser gedämpft als Biegebelastungen, da die Anschlagmittel üblicherweise sehr weich gegenüber Biegungen sind und dies nicht dämpfen.

Fig. 6 zeigt ein alternatives Ausführungsbeispiel eines erfindungsgemäßen Lastaufnahmemittels 30', das wiederum einen Spreizer 32, ein oberes Hebegerüst 34, ein unteres Hebegerüst 38 und dazwischen einen Schwingungsdämpfer 36 aufweist. Im Unterschied zum Ausführungsbeispiel gemäß Fig. 5 ist das Anschlagmittel 40 in Befestigungspunkten 42' im oberen Hebegerüst 34 befestigt. Der Spreizer 32 weist Anschlagpunkte 44 auf, die wiederum gegenüber den Befestigungspunkten 42' versetzt sein können. Das untere Hebegerüst 38 ist selber nicht unmittelbar mit dem Anschlagmittel 40 verbunden, trägt jedoch unter sich den Turm bzw. das Turmsegment 16. Es können strukturelle Trageverbindungen zwischen dem oberen Hebegerüst und dem unteren Hebegerüst 38 vorhanden sein, die in Fig. 6 nicht dargestellt sind. Alternativ oder zusätzlich kann das Gehäuse des Schwingungsdämpfers ein Teil der Tragstruktur zwischen oberem Hebegerüst 34 und unterem Hebegerüst 36 sein.

Der Schwingungsdämpfer 36 kann entweder fester Bestandteil des Lastaufnahmemittels 30 sein oder mit diesem verbindbar, insbesondere austauschbar, ausgebildet sein. So ist es beispielsweise möglich, eine größere Anzahl von Lastaufnahmemitteln bereit zu halten, die zur Aufnahme eines Schwingungsdämpfers ausgebildet sind, und eine kleinere Anzahl von Schwingungsdämpfern. Die beispielsweise offshore zu installierenden Turmsektionen oder Türme können dann im Hafen bereits mit den Lastaufnahmemitteln bestückt werden, die erst vor Ort auf dem Errichterschiff oder einer Errichterplattform mit einem Schwingungsdämpfer bestückt werden.

Fig. 7 zeigt eine mögliche Ausführung eines alternativen erfindungsgemäßen Lastaufnahmemittels 30 in einer kreisrunden Ausführung in einer schematischen Aufsicht. Zentral sind drei Schwingungsdämpfer 36, 36' und 36" gezeigt, die unterschiedlich dimensioniert sind und somit auch unterschiedliche Dämpfungsfrequenzen haben. Wie bereits in den Fig. 4 bis 6 können auch in Fig. 7 die Schwingungsdämpfer 36, 36', 36" als Flüssigkeitsdämpfer, als Masse-Federdämpfer oder als Pendeldämpfer ausgeführt sein. Aufgrund der eher geringen zur Verfügung stehenden Bauhöhe von einem Meter oder wenigen Metern bieten sich Masse-Feder-Dämpfer oder Flüssigkeitsdämpfer, also Schwappdämpfer oder TLCD, besonders an.

Für einen Pendeldämpfer wäre ggf. noch Platz im Turm, d.h. der Pendeldämpfer würde aus dem Lastaufnahmemittel in den Turm hineinragen. Dieser Platz ist allerdings spätestens durch das oberste Schott im Turm begrenzt, das üblicherweise einen Meter oder etwas mehr unterhalb des oberen Turmrandes angeordnet ist.

Fig. 7 zeigt ein unteres Hebegerüst 38 des Lastaufnahmemittels 30", das außerdem als Deckel 48 ausgebildet ist bzw. einen Deckel 48 aufweist und somit den Turm 16 bzw. die Turmsektion 14 darunter witterungsdicht, insbesondere regendicht, verschließt. In dem Deckel 48 sind zwei Turmluken 46 angeordnet, durch die ein Einstieg in den Turm 14 ermöglicht wird. Am Umfang des Hebegerüsts 38 sind jeweils Befestigungspunkte 42 für Anschlagmittel eines Hebezeugs angeordnet. Die Steifheit des Hebegerüsts 38 führt dazu, dass die Kräfte, die stauchend auf den Querschnitt des Turms wirken könnten, durch das Hebegerüst 38 aufgenommen werden, so dass es zu keiner Stauchung oder Verformung des Querschnitts des Turms bzw. der Turmsektion kommt. Zusätzlich wirkt auch der in den Figuren 5 und 6 gezeigte Spreizer 32 in dieser Hinsicht ausgleichend.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Untergrund
- 10: Windenergieanlage
- 12: Gründung
- 14: Turm
- 16: Turmsektion
- 20: Maschinenhaus
- 22: Rotornabe
- 24: Spinner
- 26: Rotorblatt
- 30, 30', 30": Lastaufnahmemittel
- 32: Spreizer
- 34: oberes Hebegerüst
- 36, 36', 36": Schwingungsdämpfer
- 37^{I}: Masse
- 37^{II}: Feder
- 37^{III}: Dämpfungsglied
- 38: unteres Hebegerüst
- 40: Anschlagmittel
- 42, 42': Befestigungspunkt
- 44: Anschlagpunkt
- 46: Turmluke
- 48: Deckel
- 50: Hebezeug
- 52: Tragmittel

## Patentansprüche

1. Lastaufnahmemittel (30, 30', 30") für einen Turm (14) oder eine Turmsektion (16) einer Windenergieanlage (10), das Turmbefestigungsmittel zur Befestigung an einem oberen Ende oder im Bereich eines oberen Endes eines Turms (14) oder einer Turmsektion (16) einer Windenergieanlage (10) und Befestigungspunkte (42, 42') zur Befestigung wenigstens eines Anschlagmittels (40) eines Hebezeugs (50) aufweist, **dadurch gekennzeichnet, dass** das Lastaufnahmemittel (30, 30', 30") wenigstens einen Schwingungsdämpfer (36, 36', 36") umfasst oder wenigstens ein Schwingungsdämpfer (36, 36', 36") am Lastaufnahmemittel (30, 30', 30"), insbesondere lösbar und/oder austauschbar, befestigt ist, dessen Dämpfungsfrequenz im Bereich einer Eigenfrequenz eines oder einer eingespannten oder frei stehenden gondellosen Turms (14) oder Turmsektion (16) liegt.

2. Lastaufnahmemittel (30, 30', 30") nach Anspruch 1, **dadurch gekennzeichnet, dass** der Schwingungsdämpfer (36, 36', 36") als Flüssigkeitsdämpfer, insbesondere als Schwappdämpfer oder als Tuned Liquid Column Dämpfer (TLCD), als Pendeldämpfer mit oder ohne viskose Flüssigkeit oder als Feder-Masse-Dämpfer ausgebildet ist oder mehrere Schwingungsdämpfer (36, 36', 36") gleichen oder unterschiedlichen Typs umfasst sind.

3. Lastaufnahmemittel (30, 30', 30") nach Anspruch 1 oder 2, **dadurch gekennzeichnet, dass** mehrere Schwingungsdämpfer (36, 36', 36"), insbesondere mehrere Schwingungsdämpfer mit unterschiedlichen Dämpfungsfrequenzen, vorgesehen sind.

4. Lastaufnahmemittel (30, 30', 30") nach einem der Ansprüche 1 bis 3, **dadurch gekennzeichnet, dass** die Dämpfungsfrequenz oder Dämpfungsfrequenzen des Schwingungsdämpfers (36, 36', 36") oder der Schwingungsdämpfer (36, 36', 36") zwischen 0,2 und 1,5 Hz, insbesondere zwischen 0,5 und 1,0 Hz, liegt oder liegen.

5. Lastaufnahmemittel (30, 30', 30") nach einem der Ansprüche 1 bis 4, **dadurch gekennzeichnet, dass** eine Eigenfrequenz des wenigstens einen Schwingungsdämpfers (36, 36', 36") an verschiedene Transportzustände, Bauzustände, Türme (14) und/oder Turmsektionen (16) anpassbar ist.

6. Lastaufnahmemittel (30, 30', 30") nach einem der Ansprüche 1 bis 5, **dadurch gekennzeichnet, dass** der Schwingungsdämpfer (36, 36', 36"), insbesondere austauschbar, zwischen einem oberen Hebegerüst (34) und einem unteren Hebegerüst (38) angeordnet ist.

7. Lastaufnahmemmittel nach Anspruch 6, **dadurch gekennzeichnet, dass** das untere Hebegerüst (38) als Transportrahmen ausgebildet ist, auf dem das obere Hebegerüst (34) mit dem Schwingungsdämpfer (36, 36', 36") aufsetzbar und befestigbar ist.

8. Lastaufnahmemittel nach Anspruch 6 oder 7, **dadurch gekennzeichnet, dass** das obere Hebegerüst (34) Befestigungspunkte (42) für ein Anschlagmittel (40) aufweist oder, dass das obere Hebegerüst (34) Anschlagpunkte (44) und das untere Hebegerüst (38) Befestigungspunkte (42') für ein Anschlagmittel (40) aufweist, wobei insbesondere die Anschlagpunkte (44) und die Befestigungspunkte (42') gegeneinander versetzt angeordnet sind.

9. Lastaufnahmemittel (30, 30', 30") nach einem der Ansprüche 1 bis 5, **dadurch gekennzeichnet, dass** der Schwingungsdämpfer fest mit einem einzigen Hebegerüst verbunden ist.

10. Lastaufnahmemittel nach einem der Ansprüche 6 bis 9, **dadurch gekennzeichnet, dass** ein Gehäuse des Schwingungsdämpfers (36, 36', 36") oder der Schwingungsdämpfer (36, 36', 36") tragender Teil des Lastaufnahmemittels ist.

11. Lastaufnahmemittel (30, 30', 30") nach einem der Ansprüche 1 bis 10, **dadurch gekennzeichnet, dass** wenigstens ein Teil des Lastaufnahmemittels (30, 30') als Deckel (48) für den Turm (14) oder die Turmsektion (16) ausgebildet ist, und insbesondere wenigstens eine Turmluke (46) für einen Zugang zum Inneren des Turms (14) oder der Turmsektion (16) aufweist.

12. Verfahren zum Errichten einer Windenergieanlage (10), insbesondere einer Offshore-Windenergieanlage, mit den folgenden Verfahrensschritten:
a) ein Turm (14) oder eine Turmsektion (16) wird an seinem oder ihrem in Bezug auf den aufgerichteten Zustand oberen Ende mit einem Lastaufnahmemittel (30, 30', 30") verbunden,
b) ein Anschlagmittel (40) eines Hebezeugs (50) wird mit dem Lastaufnahmemittel (30, 30', 30") verbunden,
c) der Turm (14) oder die Turmsektion (16) wird aufgerichtet und/oder angehoben,
d) gegebenenfalls werden im Falle eines Turms (14) aus mehreren Turmsektionen (16) die Turmsektionen (16) nacheinander aufeinander gesetzt und miteinander zu dem Turm (14) verbunden,
e) im aufgerichteten Zustand des Turms (14) oder der Turmsektion (16) wird das Lastaufnahmemittel (30, 30', 30") entfernt,
f) nach Entfernung des Lastaufnahmemittels (30, 30') vom vollständig errichteten Turm (14) wird eine Windenergieanlagengondel (20) auf den Turm (14) aufgesetzt,
**dadurch gekennzeichnet, dass** im aufgerichteten Zustand des Turms (14) und/oder der Turmsektionen (16) Schwingungen des Turms (14) oder der Turmsektionen (16) durch einen oder mehrere Schwingungsdämpfer (36, 36', 36") in oder an dem Lastaufnahmemittel (30, 30', 30") gedämpft werden.

13. Verfahren nach Anspruch 12, **dadurch gekennzeichnet, dass** das Lastaufnahmemittel (30, 30', 30") bereits vor einem Transport, insbesondere einer Verschiffung, des Turms (14) oder der Turmsektion (16) mit dem Turm (14) oder der Turmsektion (16) verbunden wird.

14. Verfahren nach Anspruch 12 oder 13, **dadurch gekennzeichnet, dass** der Turm (14) bereits vor einem Transport, insbesondere einer Verschiffung, oder vor dem Aufrichten aus zwei oder mehr Turmsektionen (16) zusammengesetzt wird und mit einem Lastaufnahmemittel (30, 30', 30") nach einem der Ansprüche 1 bis 7 verbunden wird.

15. Verfahren nach einem der Ansprüche 12 bis 14, **dadurch gekennzeichnet, dass** eine Eigenfrequenz des wenigstens einen Schwingungsdämpfers (36, 36', 36") an verschiedene Transportzustände, Bauzustände, Türme (14) und/oder Turmsektionen (16) angepasst wird.

## Claims

1. A load-handling means (30, 30', 30") for a tower (14) or a tower section (16) of a wind energy installation (10), which comprises tower fastening means for fastening to an upper end of, or in the region of an upper end of, a tower (14) or of a tower section (16) of a wind energy installation (10), and fastening points (42, 42') for fastening at least one anchoring means (40) of a lifting gear unit (50), **characterised in that** the load-handling means (30, 30', 30") comprises at least one vibration damper (36, 36', 36"), or that at least one vibration damper (36, 36', 36") is fastened to the load-handling means (30, 30', 30"), in particular in a detachable and / or exchangeable manner, the damping frequency of which is in the region of a natural frequency of a clamped gondola-less tower (14) or tower section (16), or of a free-standing gondola-less tower (14) or tower section (16).

2. The load-handling means (30, 30', 30") in accordance with claim 1, **characterised in that** the vibration damper (36, 36', 36") is constructed as a liquid damper, in particular as a sloshing damper or as a tuned liquid column damper (TLCD), as a pendulum damper with or without viscous liquid or as a spring-mass damper, or that a plurality of vibration dampers (36, 36', 36") of the same type or of different types are comprised.

3. The load-handling means (30, 30', 30") in accordance with claim 1 or 2, **characterised in that** a plurality of vibration dampers (36, 36', 36"), in particular a plurality of vibration dampers with different damping frequencies, are provided.

4. The load-handling means (30, 30', 30") in accordance with any one of the claims 1 to 3, **characterised in that** the damping frequency or the damping frequencies of the vibration damper (36, 36', 36") or the vibration dampers (36, 36', 36") is or are between 0.2 and 1.5 Hz, in particular between 0.5 and 1.0 Hz.

5. The load-handling means (30, 30', 30") in accordance with any one of the claims 1 to 4, **characterised in that** a natural frequency of the at least one vibration damper (36, 36', 36") can be adapted to different states of transport, states of construction, towers (14) and / or tower sections (16).

6. The load-handling means (30, 30', 30") in accordance with any one of the claims 1 to 5, **characterised in that** the vibration damper (36, 36', 36"), is arranged between an upper lifting frame (34) and a lower lifting frame (38), in particular in an exchangeable manner.

7. The load-handling means in accordance with claim 6, **characterised in that** the lower lifting frame (38) is constructed as a transport frame on which the upper lifting frame (34) with the vibration damper (36, 36', 36") can be placed and fastened.

8. The load-handling means in accordance with claim 6 or 7, **characterised in that** the upper lifting frame (34) has fastening points (42) for an anchoring means (40), or **in that** the upper lifting frame (34) has anchoring points (44) and the lower lifting frame (38) has fastening points (42') for an anchoring means (40), wherein in particular the anchoring points (44) and the fastening points (42') are arranged offset with respect to one another.

9. The load-handling means (30, 30', 30") in accordance with any one of the claims 1 to 5, **characterised in that** the vibration damper is connected to a single lifting frame in a fixed fashion.

10. The load-handling means in accordance with any one of the claims 6 to 9, **characterised in that** a housing of the vibration damper (36, 36', 36"), or the vibration damper (36, 36', 36"), is a load-bearing part of the load-handling means.

11. The load-handling means (30, 30', 30") in accordance with any one of the claims 1 to 10, **characterised in that** at least part of the load-handling means (30, 30') is constructed as a cover (48) for the tower (14) or the tower section (16), and in particular has at least one tower hatch (46) for access to the interior of the tower (14) or the tower section (16).

12. A method of erecting a wind energy installation (10), in particular an offshore wind energy installation, the method comprising the following method steps:
a) a tower (14) or a tower section (16) are connected at their - in relation to the erected state - upper end, to a load-handling means (30, 30', 30"),
b) an anchoring means (40) of a lifting gear unit (50) is connected to the load-handling means (30, 30', 30"),
c) the tower (14) or the tower section (16) is erected and / or lifted,
d) if applicable, in the case of a tower (14) comprising a plurality of tower sections (16), the tower sections (16) are successively placed one on top of the other and are connected to one another in order to form the tower (14),
e) in the erected state of the tower (14) or of the tower section (16), the load-handling means (30, 30', 30") is removed,
f) after removal of the load-handling means (30, 30') from the completely erected tower (14), a gondola (20) of the wind energy installation is placed on the tower (14),
**characterised in that**, in the erected state of the tower (14) and / or of the tower sections (16), vibrations of the tower (14) or of the tower sections (16) are damped by one or more vibration dampers (36, 36', 36") in or on the load-handling means (30, 30', 30").

13. The method in accordance with claim 12, **characterised in that** the load-handling means (30, 30', 30") is already connected to the tower (14) or to the tower section (16) before a transport of the tower (14) or of the tower section (16), in particular a shipment of the tower (14) or of the tower section (16).

14. The method in accordance with claim 12 or 13, **characterised in that** the tower (14) is already assembled from two or more tower sections (16) before a transport, in particular before a shipment, or before the erection, and is connected to a load-handling means (30, 30', 30") in accordance with any one of the claims 1 to 7.

15. The method in accordance with any one of the claims 12 to 14, **characterised in that** a natural frequency of the at least one vibration damper (36, 36', 36") is adapted to different states of transport, different states of construction, different towers (14) and / or different tower sections (16).

## Revendications

1. Moyen d'absorption de charges (30, 30', 30") pour une tour (14) ou une section de tour (16) d'une éolienne (10), qui présente des moyens de fixation de tour destinés à être fixés au niveau d'une extrémité supérieure ou dans la zone d'une extrémité supérieure d'une tour (14) ou d'une section de tour (16) d'une éolienne (10) et des points de fixation (42, 42') servant à fixer au moins un moyen de butée (40) d'un engin de levage (50), **caractérisé en ce que** le moyen d'absorption de charges (30, 30', 30") comprend au moins un amortisseur de vibrations (36, 36', 36") ou au moins un amortisseur de vibrations (36, 36', 36") est fixé, en particulier de manière amovible et/ou interchangeable, au niveau du moyen d'absorption de charges (30, 30', 30''), dont la fréquence d'amortissement se situe dans la plage d'une fréquence propre d'une tour (14) ou d'une section de tour (16) sans nacelle enserrée ou posée librement.

2. Moyen d'absorption de charges (30, 30', 30") selon la revendication 1, **caractérisé en ce que** l'amortisseur de vibrations (36, 36', 36") est réalisé sous la forme d'un amortisseur à liquide, en particulier sous la forme d'un amortisseur de clapotements ou d'un amortisseur TLCD (Tuned Liquid Column, de colonne à liquide accordé), sous la forme d'un amortisseur à pendule avec ou sans liquide visqueux ou sous la forme d'un amortisseur de masse de ressort ou plusieurs amortisseurs de vibrations (36, 36', 36") de même type ou de type différent sont compris.

3. Moyen d'absorption de charges (30, 30', 30") selon la revendication 1 ou 2, **caractérisé en ce que** sont prévus plusieurs amortisseurs de vibrations (36, 36', 36''), en particulier plusieurs amortisseurs de vibrations avec des fréquences d'amortissement différentes.

4. Moyen d'absorption de charges (30, 30', 30") selon l'une quelconque des revendications 1 à 3, **caractérisé en ce que** la fréquence d'amortissement ou les fréquences d'amortissement de l'amortisseur de vibrations (36, 36', 36") ou des amortisseurs de vibrations (36, 36', 36") se situe ou se situent entre 0,2 et 1,5 Hz, en particulier entre 0,5 et 1,0 Hz.

5. Moyen d'absorption de charges (30, 30', 30") selon l'une quelconque des revendications 1 à 4, **caractérisé en ce qu'**une fréquence propre de l'au moins un amortisseur de vibrations (36, 36', 36") peut être adaptée à différents états de transport, états de construction, à différentes tours (14) et/ou sections de tour (16).

6. Moyen d'absorption de charges (30, 30', 30") selon l'une quelconque des revendications 1 à 5, **caractérisé en ce que** l'amortisseur de vibrations (36, 36', 36") est disposé, en particulier de manière interchangeable, entre une structure de levage supérieure (34) et une structure de levage inférieure (38).

7. Moyen d'absorption de charges (30, 30', 30") selon la revendication 6, **caractérisé en ce que** la structure de levage inférieure (38) est réalisée sous la forme d'un cadre de transport, sur lequel la structure de levage supérieure (34) avec l'amortisseur de vibrations (36, 36', 36") peut être placée ou fixée.

8. Moyen d'absorption de charges (30, 30', 30") selon la revendication 6 ou 7, **caractérisé en ce que** la structure de levage supérieure (34) présente des points de fixation (42) pour un moyen de butée (40), ou que la structure de levage supérieure (34) présente des points de butée (44) et la structure de levage inférieure (38) présente des points de fixation (42') pour un moyen de butée (40), dans lequel en particulier les points de butée (44) et les points de fixation (42') sont disposés de manière décalée les uns à l'encontre des autres.

9. Moyen d'absorption de charges (30, 30', 30") selon l'une quelconque des revendications 1 à 5, **caractérisé en ce que** l'amortisseur de vibrations est relié de manière solidaire à une unique structure de levage.

10. Moyen d'absorption de charges (30, 30', 30") selon l'une quelconque des revendications 6 à 9, **caractérisé en ce qu'**un boîtier de l'amortisseur de vibrations (36, 36', 36") ou l'amortisseur de vibrations (36, 36', 36") est une partie porteuse du moyen d'absorption de charges.

11. Moyen d'absorption de charges (30, 30', 30") selon l'une quelconque des revendications 1 à 10, **caractérisé en ce qu'**au moins une partie du moyen d'absorption de charges (30, 30') est réalisée sous la forme d'un couvercle (48) pour la tour (14) ou la section de tour (16), et en particulier présente au moins une trappe de tour (46) pour un accès à l'intérieur de la tour (14) ou de la section de tour (16).

12. Procédé servant à ériger une éolienne (10), en particulier une éolienne offshore, avec les étapes de procédé qui suivent :
a) une tour (14) ou une section de tour (16) est reliée au niveau de son extrémité supérieure par rapport à l'état dressé à un moyen d'absorption de charges (30, 30', 30"),
b) un moyen de butée (40) d'un engin de levage (50) est relié au moyen d'absorption de charges (30, 30', 30"),
c) la tour (14) ou la section de tour (16) est dressée et/ou relevée,
d) éventuellement, dans le cas d'une tour (14) composée de plusieurs sections de tour (16), les sections de tour (16) sont placées les unes sur les autres les unes après les autres et sont reliées entre elles pour former la tour (14),
e) dans l'état dressé de la tour (14) ou de la section de tour (16), le moyen d'absorption de charges (30, 30', 30") est retiré,
f) après le retrait du moyen d'absorption de charges (30, 30') de la tour (14) totalement construite, une nacelle d'éolienne (20) est placée sur la tour (14),
**caractérisé en ce que** dans l'état dressé de la tour (14) et/ou des sections de tour (16), des vibrations de la tour (14) ou des sections de tour (16) sont amorties par un ou plusieurs amortisseurs de vibrations (36, 36', 36") dans ou au niveau du moyen d'absorption de charges (30, 30', 30'').

13. Procédé selon la revendication 12, **caractérisé en ce que** le moyen d'absorption de charges (30, 30', 30") est relié, déjà avant un transport, en particulier avant un transport par bateau, de la tour (14) ou de la section de tour (16), à la tour (14) ou à la section de tour (16).

14. Procédé selon la revendication 12 ou 13, **caractérisé en ce que** la tour (14) est composée, déjà avant un transport, en particulier avant un transport par bateau, ou avant le redressement, de deux ou de plusieurs sections de tour (16) et est reliée à un moyen d'absorption de charges (30, 30', 30") selon l'une quelconque des revendications 1 à 7.

15. Procédé selon l'une quelconque des revendications 12 à 14, **caractérisé en ce qu'**une fréquence propre de l'au moins un amortisseur de vibrations (36, 36', 36") est adaptée à différents états de transport, état de construction, à différentes tours (14) et/ou sections de tour (16).
